# EUROPEAN PATENT SPECIFICATION

(11) **EP 0 826 530 B1**
(45) Date of publication and mention of the grant of the patent: **26.02.2003**
(21) Application number: 97306581.6
(22) Date of filing: 28.08.1997
(51) Int. Cl.: B60H 1/03

(54) **Heating apparatus for automotive vehicle**
Kraftfahrzeug- Heizanlage
Installation de chauffage pour véhicule automobile

(30) Priority: 30.08.1996 JP 23076296; 06.08.1997 JP 21230797
(43) Date of publication of application: 04.03.1998
(73) Proprietor: AISIN SEIKI KABUSHIKI KAISHA, Kariya City Aichi Pref. (JP)
(72) Inventor: Kodama, Hisashi, Kariya-shi, Aichi-ken (JP); Nagakane, Keisuke, Kariya-shi, Aichi-ken (JP); Shirai, Makoto, Kariya-shi, Aichi-ken (JP); Nakai, Yoshitomo, Kariya-shi, Aichi-ken (JP); Hotta, Takayuki, Kariya-shi, Aichi-ken (JP); Chujyo, Masaki, Anjyo-shi , Aichi-ken (JP); Shimanuki, Shizuo, Kariya-shi, Aichi-ken (JP)
(74) Representative: SERJEANTS

(56) References cited:
- US-A- 4 974 778
- US-A- 5 332 367

## Description

The present invention relates to a heating apparatus for automotive vehicles, and more particularly to a heating apparatus of the type in which shearing heat of viscous fluid caused by rotation of a rotor is adapted to heat cooling water in a hot water supply circuit for a heater in a passenger compartment of the vehicle.

In Japanese Utility Model Examined Publication No. 7(1995)-22326, there has been proposed a heating apparatus of the type which includes a housing, an input shaft mounted within the housing for drive connection to a source of driving torque such as a prime mover of an automotive vehicle, a rotor mounted on the input shaft within the housing for rotation therewith in such a manner that an operation chamber filled with an amount of viscous fluid is formed between the rotor and a pair of opposed internal end walls of the housing, a hydraulic control mechanism for discharging the viscous fluid from the operation chamber into an accumulation chamber and for charging the viscous fluid into the operation chamber from the accumulation chamber, and means for transferring shearing heat of the viscous fluid caused by rotation of the rotor heating means to cooling water in a water supply circuit for a heater.

In the heating apparatus, the input shaft is adapted only for the heating apparatus, and the hydraulic control mechanism is composed of a diaphragm maintained in a first position under load of a spring to be moved to a second position against the load of the spring when applied with negative pressure from a manifold of an internal combustion engine. While the heating apparatus is being used, the diaphragm is moved by the biasing force of the spring from the second position to the first position to supply the viscous fluid into the operation chamber from the accumulation chamber. When the heating apparatus is not used, the diaphragm is applied with the negative pressure from the engine manifold and is moved from the first position to the second position against the biasing force of the spring to discharge the viscous fluid from the operation chamber into the accumulation chamber.

In such a construction of the heating apparatus, the input shaft only for the heating apparatus causes an increase of loss of the power to be applied to other accessory devices. To enhance responsiveness of the diaphragm in operation in the hydraulic control mechanism, it is required to increase the load of the spring so as to move the diaphragm from the second position to the first position against large flow resistance of the viscous fluid, and it is also required to increase the pressure receiving area of the diaphragm so as to move the diaphragm from the first position to the second position against the load of the spring. For this reason, the hydraulic control mechanism in the heating apparatus may not be provided in a small size. In the case that the pressure receiving area of the diaphragm may not increased, quick discharge of the viscous fluid from the operation chamber may not be effected. This results in an increase of loss of the power. In addition, movements of the diaphragm in the hydraulic control mechanism may not be controlled in accordance with the temperature of cooling water to be heated. As a result, the viscous fluid in the operation chamber is sheared by rotation of the rotor even when the temperature of cooling water is sufficiently heated. This causes an increase of loss of the power.

In view of the problems described above, a primary object of the present invention is directed to provide a heating apparatus for an automotive vehicle in which a rotary machine such a hydraulic rotary pump, a rotary compressor, a rotary water pump or the like is mounted on a drive shaft of the heating apparatus to provide the drive system of the heating apparatus in a simple construction and to reduce loss of the power in the drive system.

Another object of the present invention is to provide a heating apparatus for an automotive vehicle capable of enhancing responsiveness of a hydraulic control mechanism for control of charge and discharge of viscous fluid to and from an operation chamber in a simple construction.

A further object of the present invention is to provide a heating apparatus for an automotive vehicle in which the hydraulic control mechanism is switched over in accordance with a temperature of cooling water to be heated by shearing heat of the viscous fluid to eliminate loss or the power caused by useless operation of the heating apparatus.

According to the present invention, the primary object is accomplished by providing a heating apparatus for an automotive vehicle which includes a housing, an input shaft rotatably mounted within the housing for drive connection to a prime mover of the vehicle, a rotor mounted on the input shaft within the housing in such a manner that an operation chamber filled with an amount of viscous fluid is formed between the rotor and an internal end wall of the housing, a hydraulic control mechanism for discharging the viscous fluid from the operation chamber into an accumulation chamber and for charging the viscous fluid into the operation chamber from the accumulation chamber, and means for transferring shearing heat of the viscous fluid caused by rotation of the rotor to cooling water in a water supply circuit for a heater in a passenger compartment of the vehicle, wherein a rotary accessory device is mounted on the input shaft to be driven by power applied from the prime mover together with the rotor.

In the heating apparatus, it is preferable that the hydraulic control mechanisms comprises a cylinder in open communication with the operation chamber at one end thereof, a piston slidably disposed within the cylinder to form the accumulation chamber, a spring disposed within the cylinder to bias the piston toward the accumulation chamber, and changeover means for selectively applying thrust pressure of fluid under pressure to the piston.

It is also preferable that the changeover means is responsive to a temperature of the cooling water to be heated shearing heat of the viscous fluid for charging the viscous fluid into the operation chamber from the accumulation chamber when the temperature of the cooling water is lower than a predetermined value and for discharging the viscous fluid from the operation chamber into the accumulation chamber when the temperature of the cooling water becomes higher than the predetermined value.

In a practical embodiment of the present invention, a hydraulic rotary pump or a water pump may be mounted on the input shaft as the rotary accessory device to supply fluid under pressure or water under pressure to said piston under control of the changeover means.

For a better understanding of the present invention, and to show how the same may be carried into effect, reference will now be made, by way of example, to the accompanying drawings, in which:
Fig. 1 is a vertical sectional view of a first embodiment of a heating apparatus for an automotive vehicle in accordance with the present invention;
Fig. 2 is an enlarged sectional view of a changeover valve shown in Fig. 1;
Fig. 3 is an enlarged sectional view showing a mode of operation of the changeover valve shown in Fig. 2;
Fig. 4 is a vertical sectional view of a second embodiment of a heating apparatus for an automotive vehicle in accordance with the present invention; and
Fig. 5 is a vertical sectional view of a modification of the second embodiment shown in Fig. 4.

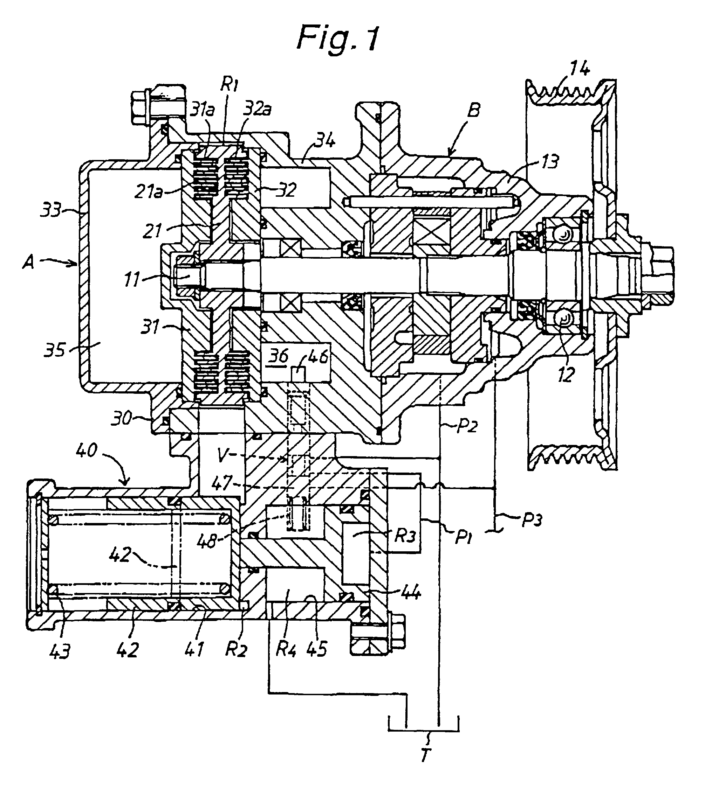

Illustrated in Fig. 1 of the drawings is a first embodiment of a heating apparatus A for an automotive vehicle in accordance with the present invention which is assembled in combination with a hydraulic rotary pump B for a power-assisted steering apparatus mounted on a drive shaft 11 to be driven by drive torque applied from an internal combustion engine of the vehicle. The drive shaft 11 is rotatably mounted within a pump housing 13 through a ball bearing 12 and is provided at one end thereof with a pulley 14 for drive connection to a crank pulley (not shown) of the engine.

The heating apparatus A includes a rotor 21 contained within a housing assembly 30 to form an operation chamber R1 filled with an amount of viscous fluid such as silicon oil and mounted on the drive shaft 11 for rotation therewith. The rotor 21 is formed at its opposite sides with a pair of concentric annular rotary fins 21a. The housing assembly 30 is composed of a circular end plate 31 and an annular end plate 32 placed at opposite sides of the rotor 21 and housing shells 33 and 34 coupled with each other to contain the end plates 31 and 32. The pump housing 13 is mounted to the housing shell 34. A left-hand water jacket 35 is formed between the circular end plate 31 and housing shell 33, and a right-hand water jacket 36 is formed between the annular end plate 32 and housing shell 34. The end plates 31 and 32 are formed with concentric annular stationary fins 31a and 32a respectively coupled with the annular rotary fins 21a of rotor 21 to form a pair of labyrinths. The water jackets 35 and 36 are filled with cooling water to be heated by shearing heat of the viscous fluid caused by rotation of the rotor in the housing 30. The water jackets 35 and 36 are connected to a bypass passage of a cooling water supply passage for the engine to supply hot water therethrough into a heater (not shown) in a passenger compartment of the vehicle.

Provided within the housing assembly 30 is a hydraulic control mechanism 40 for control of charge and discharge of the viscous fluid to and from the operation chamber R1. The hydraulic control mechanism 40 includes a cylinder 41 formed in a cylinder block secured to the housing assembly 30 and communicated at its one end with the operation chamber R1, a piston 42 slidably disposed in the cylinder 41 through a seal ring to form an accumulation chamber R2, a coil spring 43 supported by a retainer plate in cylinder 41 to bias the piston 42 toward the accumulation chamber R2, a plunger 44 slidably disposed with a right-hand cylinder 45 formed in the cylinder block to subdivide the interior of cylinder 45 into a fluid chamber R3 and a drain chamber R4. The fluid chamber R3 is supplied with fluid under pressure from the hydraulic rotary pump B under control of a changeover valve V. When applied with fluid under pressure from the hydraulic pump B under control of the changeover valve V, the plunger 44 and piston 42 are moved by thrust force of the fluid under pressure against the biasing force of spring 43. The drain chamber R4 is connected to a fluid reservoir T of rotary pump B through a drain passage to permit the flow of fluid discharged into the fluid reservoir T therefrom.

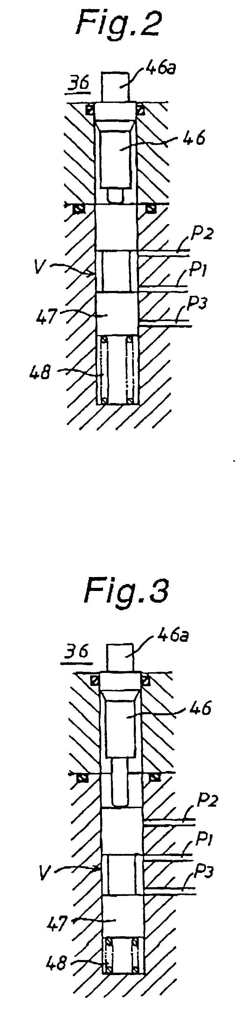

As shown in Figs. 1, 2 and 3, the changeover valve V is switched over in accordance with the temperature of cooling water in the water jacket 36. The changeover valve V is composed of a thermo-actuator 46, a spool valve 47 and a coil spring 48. The thermo-actuator 46 is provided to move the spool valve 47 against the spring 48 in accordance with rise of a temperature Tw detected by a thermal sensor 46a immersed in the cooling water in the water jacket 36. When the temperature Tw of cooling water in the water jacket 36 is lower than a predetermined value α, the spool valve 47 is maintained in a first position under the load of spring 48 to connect a passage P1 in communication with the fluid chamber R3 to a passage P2 in communication with a suction port of hydraulic rotary pump B as shown in Fig. 2. When the temperature Tw of cooling water in the water jacket 36 becomes higher than the predetermined value α, the thermo-actuator 46 is activated under control of the thermal sensor 46a to move the spool valve 47 to a second position against the load of spring 48 thereby to connect the passage P1 in communication with the fluid chamber R3 to a passage P3 in communication with a discharge port of hydraulic rotary pump B as shown in Fig. 3.

When the passage P1 is connected to the passage P2 under control of the changeover valve V to discharge therethrough the hydraulic fluid from fluid chamber R3 into the suction port of fluid pump B, the piston 42 and plunger 44 are maintained in their rightward stroke ends under the load of spring 43, and the operation chamber R1 is filled with the viscous fluid under positive pressure together with a predetermined amount of air. In such a condition. the rotor 21 rotates with the drive shaft 11 driven by the engine to shear the viscous fluid filled in spaces between the fins 21a, 31a and between the fins 21a, 32a, and shearing heat of the viscous fluid caused by rotation of the rotor 21 is transferred to the cooling water in water Jackets 35, 36 through the end plates 31 and 32. Thus, the cooling water is heated by the shearing heat and introduced as hot water into the heater core in the passenger compartment through the bypass passage.

When the temperature Tw of cooling water in water jacket 36 rises higher than the predetermined value α, the changeover valve V is switched over from the first position to the second position to establish fluid communication between the passages P1 and P3. In this instance, the fluid chamber R3 is supplied with a portion of fluid under pressure discharged from the hydraulic rotary pump B through the changeover valve V, and the plunger 44 and piston 42 are moved by thrust force of the fluid under pressure supplied to the fluid chamber R3 against the load of spring 43. In turn, the viscous fluid is discharged from the operation chamber R1 into the accumulation chamber R2 and stored therein so that only the air under negative pressure remains in the operation chamber R1. As a result, the rotor 21 rotates without any load caused by the viscous fluid. This is useful to restrain loss of the drive power and to avoid heating of the cooling water in water jackets 35, 36.

Since in this first embodiment, the rotor 12 of the heating apparatus A and the hydraulic rotary pump B for the power assisted steering apparatus are mounted on the drive shaft 11 in common, the drive system for the heating apparatus A and the hydraulic rotary pump B can be provided in a small size to reduce mechanical loss of the drive power. In operation of the heating apparatus A, fluid under pressure discharged from the hydraulic rotary pump B is introduced into the fluid chamber R3 under control of the changeover valve V so that the piston 42 is moved by thrust force of the fluid under pressure against the load of spring 43. In such an arrangement of the piston 42, the biasing force of spring 43 can be Increased to enhance responsiveness of the piston 42 in return movement without providing the piston 42 in a large size. This is useful to enhance responsiveness of the hydraulic control mechanism 40 in operation in a simple construction.

Since in this first embodiment, the piston 42 is arranged to be moved by thrust force of fluid under pressure supplied to the fluid chamber R3 from the hydraulic rotary pump B under control of the changeover valve V. the hydraulic control mechanism 40 for the heating apparatus can be provided in a simple construction.

Although in the heating apparatus A shown in Fig. 1, the piston 42 is arranged to be moved by the thrust force of fluid under pressure applied thereto against the biasing force of spring 43 for permitting the flow of viscous fluid discharged into the accumulation chamber R2 from the operation chamber R1, the accumulation chamber R2 may be formed at the left side of piston 42 for communication with the operation chamber R1. In such a modification, the piston 42 is arranged to be applied with fluid under pressure from the hydraulic rotary pump B without the plunger 44, and the changeover valve V is arranged to apply the fluid under pressure to the piston 42 from the hydraulic rotary pump B when the temperature Tw of water in water jacket 36 is lower than the predetermined value α and to discharge the fluid under pressure applied to the piston 42 when the temperature Tw of water in water jacket 36 becomes higher than the predetermined value α. With such an arrangement of the accumulation chamber R2, the hydraulic control mechanism 40 for the heating apparatus A can be provided in a simple construction without providing the plunger 44, and the viscous fluid can be stored in the accumulation chamber during stopping of the engine to reduce the load of the heating apparatus A at start of the engine.

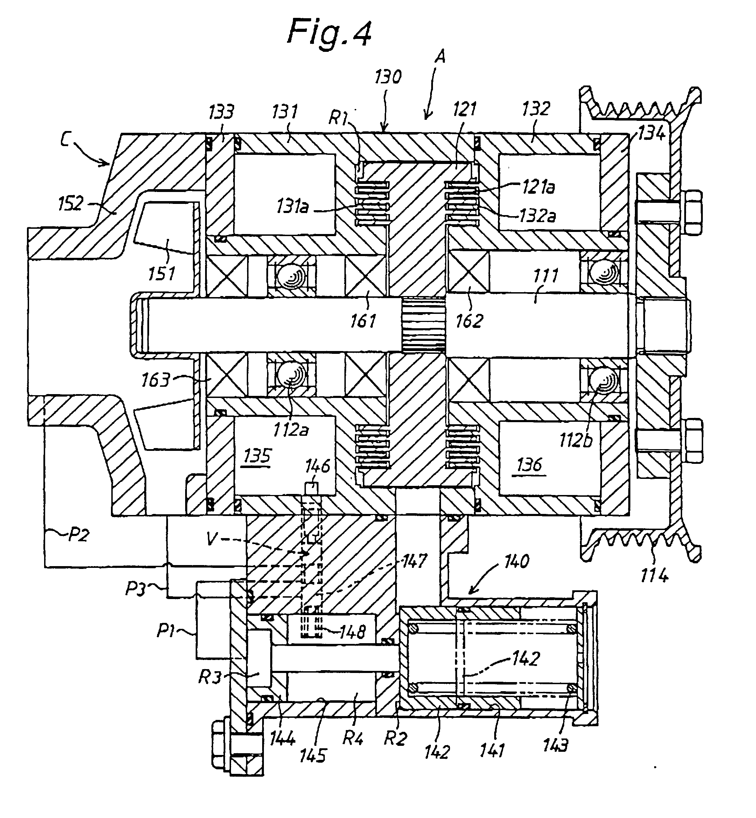

Illustrated in Fig. 4 is a second embodiment of a heating apparatus A for an automotive vehicle in accordance with the present invention, wherein a water pump assembly C is mounted on a drive shaft 111 for drive connection to an internal combustion engine of the vehicle. The water pump assembly C is composed of a pump impeller 151 mounted on the left end of drive shaft 111 for rotation therewith and a pump housing 152 mounted to a housing assembly 130 for the heating apparatus A in a liquid-tight manner to contain the pump impeller 151. The drive shaft 111 is rotatably mounted within the housing assembly 130 through a pair of axially spaced ball bearings 112a and 112b and is provided at its right end with a pulley 114 that is drivingly connected to a crank pulley (not shown) of the engine through a v-grooved belt. A rotor 121 of the heating apparatus A is contained within the housing assembly 130 to form an annular operation chamber R1 filled with an amount of viscous fluid such as silicon and is mounted on the drive shaft 111 for rotation therewith. A pair of axially spaced oil seal elements 161 and 162 are provided at opposite sides of the rotor 121 to seal a space between the drive shaft 111 and housing assembly 130, and a mechanical seal 163 is assembled with the housing assembly 130 at the right side of pump impeller 151 to seal a space between the drive shaft 111 and housing assembly 130.

The rotor 121 is formed at its opposite sides with a pair of concentric annular rotary fins 121a. The housing assembly 130 is composed of a pair of housing sections 131 and 132 jointed with each other in a liquid-tight manner to contain the rotor 121 and a pair of end plates 133 and 134 assembled with the outer ends of housing sections 131 and 132 in a liquid-tight manner to form a pair of water jackets 135 and 136. The housing sections 131 and 132 each are formed at their internal end walls with concentric annular stationary fins 131a and 132a which are coupled with the annular rotary fins 121a to form a pair of labyrinths. The water jackets 135 and 136 are filled with cooling water to be heated by shearing heat of the viscous fluid caused by rotation of the rotor 121. The water jackets 135 and 136 are connected to a bypass passage of a cooling water supply circuit for the engine to supply hot water therethrough into a heater (not shown) in a passenger compartment of the vehicle.

The heating apparatus A is provided with a hydraulic control mechanism 140 for discharging the viscous fluid from the operation chamber R1 into an accumulation chamber R2 and for charging the viscous fluid from the accumulation chamber R2 to the operation chamber R1. The hydraulic control mechanism 140 is composed of a cylinder 141, a piston 142, a coil spring 143, a plunger 144 and a changeover valve V which are assembled In the same manner as in the hydraulic control mechanism 40 of the first embodiment shown in Fig. 1. In this second embodiment, the passage P2 is connected to a suction port of the water pump C, and the passage P3 is connected to a discharge port of the water pump C. In addition, a water chamber R3 formed at the left side of piston 142 is connected to the passage P1, and a drain chamber R4 formed at the right side of piston 142 is connected to a suction port of the water pump C through a passage (not shown).

In operation of the heating apparatus A shown in Fig. 4, the plunger 144 is applied with pressure of cooling water discharged from the water pump C under control of the changeover valve V substantially in the same manner as in the first embodiment shown in Fig. 1 to discharge the viscous fluid from the operation chamber R1 when the temperature Tw of water in water jackets 135 and 136 becomes higher than a predetermined value.

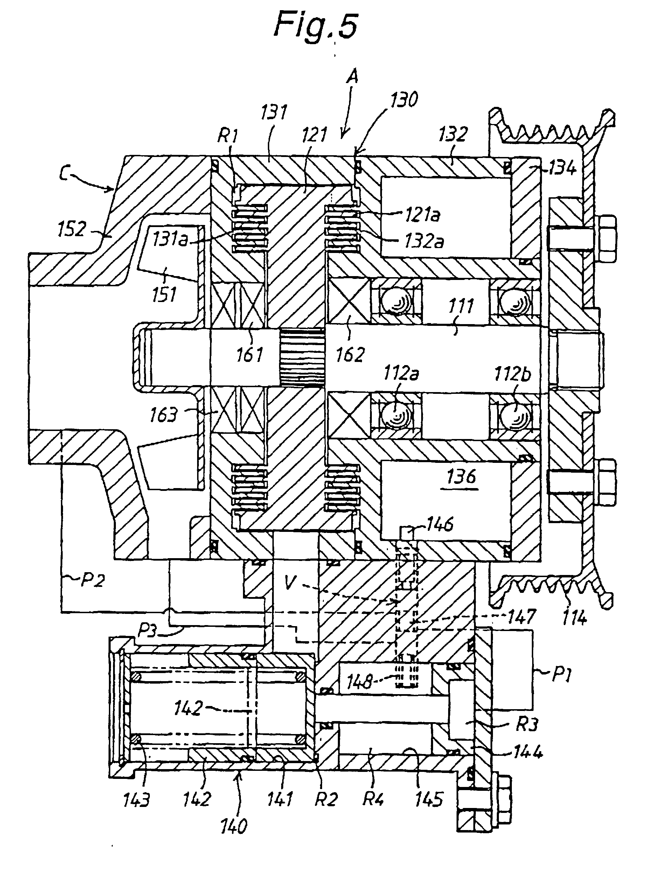

In Fig. 5, there is illustrated a modification of the heating apparatus A shown in Fig. 4, wherein a single water jacket 136 is formed at the right side of the rotor 121. In this modification, the housing assembly 130 is composed of the pair of housing sections 131 and 132 jointed with each other in a liquid-tight manner to contain the rotor 121 and the end plate 134 mounted to the right end of housing section 132 in a liquid-tight manner to form the water jacket 136, and the changeover valve V is arranged to be switched over in accordance with the temperature Tw of water in the water jacket 136. The other construction is substantially the same as that of the heating apparatus A shown in Fig. 4.

## Claims

1. A heating apparatus for an automotive vehicle including a rotor (21) for drive connection to a prime mover of the vehicle, an operation chamber (R1) for viscous fluid enclosing the rotor (21), a hydraulic control mechanism (40) for controlling the viscous fluid between the operation chamber (R1) and an accumulation chamber (R2), and means (35,36) for transferring shearing heat resulting from rotation of the rotor (21) from the viscous fluid to the cooling water in a water supply circuit for a heater in the vehicle, **characterized by** a rotary accessory device (B) for supplying fluid under pressure to said control mechanism (40) under control of a changeover valve (V) which is responsive to the temperature of the cooling water for charging and discharging the viscous fluid between the operation chamber (R1) and the accumulation chamber (R2).

2. Apparatus as claimed in claim 1 wherein the hydraulic control mechanism (40) comprises a cylinder (41) in open communication with the operation chamber (R1), a piston (42) slidably disposed within the cylinder (41) to form the accumulation chamber (R2), a spring (43) in the cylinder (41) for biasing the piston (42) towards the accumulation chamber (R2).

3. Apparatus as claimed in any preceding claim wherein the rotary accessory device (B) is a hydraulic pump.

4. Apparatus as claimed in claim 1 or claim 2 wherein the rotary accessory device is a water pump (C).

## Patentansprüche

1. Heizgerät für ein Kraftfahrzeug mit einem Rotor (21) zur Antriebsverbindung mit einer Antriebsmaschine des Fahrzeugs, einer Betriebskammer (R1) zum Umschließen des Rotors (21) ist einem viskosen Fluid, einem Hydrauliksteuermechanismus (40) zum Steuern des viskosen Fluids zwischen der Betriebskammer (R1) und einer Sammelkammer (R2) und einer Einrichtung (35, 36) zum Übertragen von Scherwärme, die aus der Drehung des Rotors (21) resultiert, von dem viskosen Fluid auf das Kühlwasser in einem Wasserversorgungskreislauf für eine Heizung in dem Fahrzeug,
**gekennzeichnet durch**
ein Zusatzdrehgerät (B) zum Zuführen von Fluid unter Druck zu dem Steuermechanismus (40) **durch** Steuerung eines Umschaltventils (V), das auf die Temperatur des Kühlwassers zum Aufnehmen und Abgeben des viskosen Fluids zwischen der Betriebskammer (R1) und der Sammelkammer (R2) reagiert.

2. Gerät nach Anspruch 1, wobei der hydraulische Steuermechanismus (40) einen Zylinder (41) in offener Kommunikation mit der Betriebskammer (R1), einen Kolben (42), der gleitend innerhalb des Zylinders (41) angeordnet ist, um die Sammelkammer (R2) auszubilden, und eine Feder (43) in dem Zylinder (41) zum Vorspannen des Kolbens (42) zu der Sammelkammer (R2) hin hat.

3. Gerät nach einem der vorstehenden Ansprüche, wobei das Zusatzdrehgerät (B) eine hydraulische Pumpe ist.

4. Gerät nach Anspruch 1 oder 2, wobei die Zusatzdreheinrichtung eine Wasserpumpe (C) ist.

## Revendications

1. Dispositif de chauffage pour un véhicule automobile incluant un rotor (21) pour connexion d'entraînement à une machine motrice du véhicule, une chambre d'opération (R1) pour un fluide visqueux entourant le rotor (21), un mécanisme de commande hydraulique (40) pour commander le fluide visqueux entre la chambre d'opération (R1) et une chambre d'accumulation (R2) et un moyen (35,36) pour transférer la chaleur de cisaillement résultant de la rotation du rotor (21) depuis le fluide visqueux à l'eau de refroidissement dans un circuit alimentation en eau pour un dispositif de chauffage dans le véhicule, **caractérisé par** un dispositif accessoire rotatif (B) pour délivrer le fluide sous pression audit mécanisme de commande (40) sous la commande d'une soupape de commutation (V) qui est sensible à la température de l'eau de refroidissement pour charger et décharger le fluide visqueux entre la chambre d'opération (R1) et la chambre d'accumulation (R2).

2. Dispositif selon la revendication 1, dans lequel le mécanisme de commande hydraulique (40) comprend un cylindre (41) en communication ouverte avec la chambre d'opération (R1), un piston (42) disposé de manière coulissante à l'intérieur du cylindre (41) pour former la chambre d'accumulation (R2), un ressort (43) dans le cylindre (41) pour solliciter le piston (42) vers la chambre d'accumulation (R2).

3. Dispositif selon l'une quelconque des revendications précédentes, dans lequel le dispositif accessoire rotatif (B) est une pompe hydraulique.

4. Dispositif selon la revendication 1 ou 2, dans lequel le dispositif accessoire rotatif est une pompe à eau (C).
